# EUROPÄISCHE PATENTSCHRIFT

(11) **EP 4 371 229 B1**
(45) Veröffentlichungstag und Bekanntmachung des Hinweises auf die Patenterteilung: **05.08.2026**
(21) Anmeldenummer: 22736199.5
(22) Anmeldetag: 14.06.2022
(51) Int. Cl.: H02P 27/08

(54) **ANTRIEBSSYSTEM MIT EINEM VON EINEM UMRICHTER GESPEISTEN ANTRIEB UND VERFAHREN ZUM BETREIBEN EINES ANTRIEBSSYSTEMS**
DRIVE SYSTEM WITH A DRIVE WHICH IS SUPPLIED BY A CONVERTER, AND METHOD FOR OPERATING A DRIVE SYSTEM
SYSTÈME D'ENTRAÎNEMENT COMPRENANT UN ENTRAÎNEMENT ALIMENTÉ PAR UN CONVERTISSEUR, ET PROCÉDÉ DE FONCTIONNEMENT D'UN SYSTÈME D'ENTRAÎNEMENT

(30) Priorität: 16.07.2021 DE 102021003695
(43) Veröffentlichungstag der Anmeldung: 22.05.2024
(73) Patentinhaber: SEW-EURODRIVE GmbH & Co. KG, 76646 Bruchsal (DE)
(72) Erfinder: BELZ, Helmut, 68753 Waghäusel (DE); REICHLE, Robert, 76297 Stutensee (DE); KARL, Heiko, 67165 Waldsee (DE)
(86) Internationale Anmeldenummer: PCT/EP2022/066194
(87) Internationale Veröffentlichungsnummer: WO 2023/285061

(56) Entgegenhaltungen:
- EP-A1- 2 602 929
- DE-A1- 10 037 968
- DE-A1- 102017 005 768
- DE-B3- 102015 005 939
- US-A1- 2016 380 573
- US-B1- 6 555 984

## Beschreibung

Die Erfindung betrifft ein Antriebssystem mit einem von einem Umrichter gespeisten Antrieb und ein Verfahren zum Betreiben eines Antriebssystems.

Es ist allgemein bekannt, dass ein Elektromotor von einem Umrichter speisbar ist, so dass eine Drehzahlregelung ausführbar ist.

Aus der DE 102 54 080 A1 ist ein Verfahren zur Datenspeicherung bekannt.

Aus der DE 10 2007 052 445 A1 ist ein Anschlusskasten eines Elektromotors bekannt.

Aus der DE 10 2013 006 730 A1 ist eine Anlage mit Anschlusseinheit bekannt.

Aus der DE 10 2017 001 460 A1 ist ein Elektrogerät bekannt.

Aus der DE 10 2010 051 413 A1 ist ein Antriebssystem bekannt.

Aus der DE 10 2009 007 559 A1 ist ein sicheres Antriebssystem bekannt.

Aus der DE 10 2016 003 514 A1 ist ein Verfahren zur Inbetriebnahme eines umrichtergespeisten Elektromotors mit einem mobilen Kommunikationsgerät bekannt.

Aus der DE 10 2008 045 476 A1 ist eine Antriebseinheit bekannt.

Aus der US 6 898 489 B1 ist ein Fahrzeugsteuerungssystem bekannt.

Aus der US 6 555 984 B1 ist als nächstliegender Stand der Technik ist ein Antriebssystem bekannt.

Aus der DE 100 37 968 A1 ist ein elektrischer Antrieb mit Motoridentifizierung bekannt.

Aus der US 2016/380573 A1 ist eine Motorsteuerung bekannt.

Aus der EP 2 602 929 A1 ist ein Verfahren zum Kommissionieren eines elektrischen Antriebs bekannt.

Aus der DE 10 2017 005768 A1 ist ein System von Automatisierungskomponenten bekannt.

Aus der DE 10 2015 005939 B3 ist ein Verfahren zum Betreiben einer elektrischen Schnittstelle bekannt.

Der Erfindung liegt daher die Aufgabe zugrunde, ein Antriebssystem weiterzubilden, wobei die Sicherheit verbessert sein soll.

Erfindungsgemäß wird die Aufgabe bei dem Antriebssystem nach den in Anspruch 1 und bei dem Verfahren nach den in Anspruch 8 angegebenen Merkmalen gelöst.

Wichtige Merkmale der Erfindung bei dem Antriebssystem mit einem von einem Umrichter gespeisten Antrieb,
wobei der Antrieb einen Elektromotor sowie weitere Antriebskomponenten aufweist,
wobei im Elektromotor eine Elektronikanordnung mit Speicher angeordnet ist,
wobei der Speicher derart geeignet ausgeführt ist, dass im Speicher eine Gesamtidentifikationsinformation hinterlegt ist, die aus den Identifikationsinformationen der Antriebskomponenten gebildet und/oder zusammengesetzt ist,
wobei der Umrichter mit der Elektronikanordnung über einen Datenübertragungskanal verbunden ist, insbesondere zum Auslesen der Gesamtidentifikationsinformation aus dem Speicher,
wobei der Umrichter einen Datenspeicher, der geeignet ist, eine erste, zu einem ersten Zeitpunkt im Speicher des Antriebs gespeicherte Gesamtidentifikationsinformation ebenfalls zu speichern, und ein Vergleichsmittel aufweist, das geeignet ist, die erste Gesamtidentifikationsinformation mit einer jeweils aktuell, insbesondere also zu einem zweiten, zeitlich dem ersten nachfolgenden Zeitpunkt, aus dem Speicher des Antriebs ausgelesenen Gesamtidentifikationsinformation zu vergleichen.

Von Vorteil ist dabei, dass eine erhöhte Sicherheit erreichbar ist, da eine Veränderung am Antrieb, wie beispielsweise ein Austausch einer Antriebskomponente, bemerkt wird und entsprechend gewarnt werden kann beziehungsweise ein Abschalten des Antriebs oder zumindest ein anderer sicherer Zustand, wie niedrige konstante Drehzahl oder dergleichen, erreichbar ist.

Bei einer vorteilhaften Ausgestaltung ist oder sind eine oder mehrere der Antriebskomponenten ein Winkelsensor, eine Bremse, eine Bremsansteuerung, ein Getriebe und/oder ein Sensor, insbesondere Temperatursensor. Von Vorteil ist dabei, dass der Antrieb verschiedenartige Antriebskomponenten aufweist, die alle von der Gesamtidentifikationsinformation umfasst sind.

Erfindungsgemäß sind die weiteren Antriebskomponenten mit dem Elektromotor mechanisch verbunden und/oder im Elektromotor integriert angeordnet. Von Vorteil ist dabei, dass der Antrieb eine mechanisch zusammengehaltene Einheit darstellt, die als Ganzes transportierbar und einbaubar ist in eine Anlage oder Maschine.

Erfindungsgemäß ist der Umrichter mit dem Antrieb mittels eines Drehstromkabels, insbesondere mittels eines Hybridkabels, verbunden. Von Vorteil ist dabei, dass der Umrichter in einem Schaltschrank geschützt anordenbar ist.

Erfindungsgemäß weist der Umrichter ein Anzeigemittel auf, das geeignet ist, das Ergebnis des Vergleichens anzuzeigen. Von Vorteil ist dabei, dass eine Warnung anzeigbar ist, wenn eine Antriebskomponente ausgetauscht wurde.

Erfindungsgemäß ist jede Antriebskomponente mit der Elektronikanordnung zur Datenübertragung verbunden und die Elektronikanordnung geeignet, eine Identitätsinformation aus der Antriebskomponente, insbesondere aus einer Datenspeichereinheit der Antriebskomponente, auszulesen und aus den jeweils ausgelesenen Identitätsinformationen der Antriebskomponenten eine Gesamtidentifikationsinformation zu bilden und im Speicher zu hinterlegen. Von Vorteil ist dabei, dass die Gesamtidentifikationsinformation zeitlich wiederkehrend aktualisiert wird, so dass beim Auslesen des Speichers durch den Umrichter ein fehlerhafter Austausch einer Antriebskomponente zeitnah erkennbar ist und Gefahren vermeidbar sind.

Bei einer vorteilhaften Ausgestaltung weisen die Antriebskomponenten jeweils einen NFC-Tag oder RFID-Tag, in dem eine jeweilige Identitätsinformation gespeichert ist, auf und die Elektronikanordnung ist geeignet, den oder die jeweiligen NFC-Tags oder RFID-Tags auszulesen und aus den jeweils ausgelesenen Identitätsinformationen der Antriebskomponenten eine Gesamtidentifikationsinformation zu bilden und im Speicher zu hinterlegen. Von Vorteil ist dabei, dass ein berührungsloses Auslesen der Identitätsinformation der Antriebskomponenten ermöglicht ist. Dies ist insbesondere bei Antriebskomponenten, wie Getriebe oder Kupplung oder dergleichen, vorteilhaft, bei denen keine elektrische Versorgung gebracht wird.

Wichtige Merkmale bei dem Verfahren zum Betreiben eines Antriebssystems sind, dass das Antriebssystem einen Umrichter und einen Antrieb aufweist,
wobei der Antrieb einen Elektromotor sowie weitere Antriebskomponenten aufweist,
wobei im Elektromotor eine Elektronikanordnung mit Speicher angeordnet ist,
wobei im Umrichter ein Datenspeicher angeordnet ist,
wobei in einem ersten Verfahrensschritt im Umrichter, insbesondere im Datenspeicher des Umrichters, eine Gesamtidentifikationsinformation abgespeichert wird,
wobei in einem zweiten, zeitlich dem ersten Verfahrensschritt nachfolgenden Verfahrensschritt eine Gesamtidentifikationsinformation aus dem Speicher der Elektronikanordnung des Antriebs ausgelesen wird, zum Umrichter übertragen wird und vom Umrichter mit der im ersten Verfahrensschritt im Datenspeicher des Umrichters gespeicherten Gesamtidentifikationsinformation verglichen wird.

Von Vorteil ist dabei, dass eine Änderung der Gesamtidentitätsinformation detektierbar ist und der Antrieb bei einem solchen Ereignis abschaltbar ist oder in einen sicheren Zustand überführbar ist.

Bei einer vorteilhaften Ausgestaltung wird im ersten Verfahrensschritt die insbesondere zu diesem Zeitpunkt aktuelle Gesamtidentifikationsinformation aus dem Speicher der Elektronikanordnung des Antriebs ausgelesen und zum Umrichter übertragen und dann im Umrichter, insbesondere in einem Datenspeicher des Umrichters, die Gesamtidentifikationsinformation abgespeichert. Von Vorteil ist dabei, dass bei Inbetriebnahme der Anlage der installierte Antrieb als korrekt angesehen wird und somit die nachfolgenden Änderungen beobachtet werden.

Bei einer vorteilhaften Ausgestaltung wird abhängig vom Ergebnis des Vergleichs eine Warninformation oder Fehlerinformation angezeigt oder weitergeleitet oder der Antrieb in einen sicheren Zustand versetzt, insbesondere abgeschaltet. Von Vorteil ist dabei, dass die Sicherheit erhöht ist.

Bei einer vorteilhaften Ausgestaltung liest vor dem ersten Verfahrensschritt und/oder zeitlich wiederkehrend die Elektronikanordnung eine jeweilige Identitätsinformation aus der jeweiligen Antriebskomponente, insbesondere aus einer jeweiligen Datenspeichereinheit der jeweiligen Antriebskomponente, aus und bildet aus den jeweils ausgelesenen Identitätsinformationen der Antriebskomponenten eine Gesamtidentifikationsinformation und hinterlegt diese im Speicher. Von Vorteil ist dabei, dass eine automatische Erzeugung der Gesamtidentifikationsinformation ausführbar ist und somit eine Änderung sicher erkennbar ist.

Bei einer vorteilhaften Ausgestaltung werden zur Bildung der Gesamtidentifikationsinformation die jeweiligen Identitätsinformationen aller Antriebskomponenten aneinander angereiht. Von Vorteil ist dabei, dass eine einfache Bildung der Gesamtidentifikationsinformation ausführbar ist.

Bei einer vorteilhaften Ausgestaltung liest die Elektronikanordnung die jeweilige Identitätsinformation der jeweiligen Antriebskomponente berührungslos, insbesondere mittels Funkwellen aus einem jeweiligen NFC- oder RFID-Tag, aus oder sind leitungsgebunden über eine Datenschnittstelle, mit welcher die Antriebskomponenten elektrisch verbunden. Von Vorteil ist dabei, dass das Getriebe mit einem NFC- oder RFID-Tag, das als elektronisches Typenschild, ausstattbar ist und somit keine elektrischen Leitungen notwendig sind.

Bei einer vorteilhaften Ausgestaltung wird im zweiten Verfahrensschritt für den Fall, dass eine Antriebskomponente als verändert erkannt wird, der Umrichter über eine Datenbusverbindung mit einem Rechner verbunden, der die Kompatibilität der aktuellen Antriebskomponente mit dem im ersten Verfahrensschritt vorhandenen Antrieb anhand der beim ersten Verfahrensschritt ausgelesenen Gesamtidentifikationsinformation überprüft und das Ergebnis der Überprüfung dem Umrichter übermittelt. Von Vorteil ist dabei, dass auch bei veränderter Antriebskomponente ein Weiterbetrieb ermöglicht ist. Nur wenn die ausgetauschte Antriebskomponente ein Sicherheitsrisiko darstellt, wird der Antrieb abgeschaltet. Von Vorteil ist dabei, dass auch bei veränderten Antriebskomponenten zunächst erst noch die Kompatibilität überprüft wird. Insbesondere wird der Antrieb aber für die Zeitdauer der Überprüfung durch den Rechner in den sicheren Zustand gebracht und/oder abgeschaltet.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

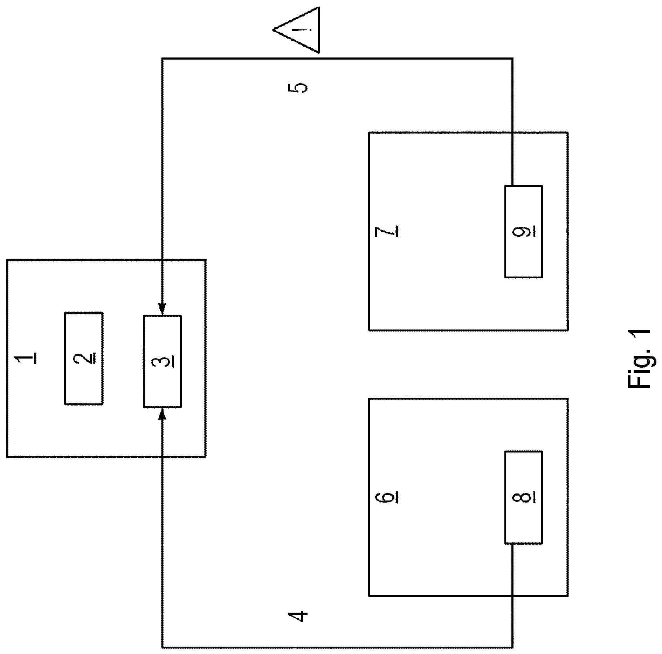

In der Figur 1 ist ein Verfahren zum Betreiben eines Antriebssystems mit einem erfindungsgemäßen Verfahren schematisch dargestellt.

Wie in der Figur dargestellt, weist das Antriebssystem einen Umrichter 1 auf und einen Antrieb (6, 7).

Der Antrieb weist einen Elektromotor auf sowie weitere Antriebskomponenten, wie Winkelsensor, Bremse, Bremsansteuerung, Getriebe und/oder Sensor, insbesondere Temperatursensor.

Der Winkelsensor ist derart am Elektromotor angeordnet, dass er geeignet ist zur Erfassung der Drehlage der Rotorwelle des Elektromotors.

Die Bremse ist derart am Elektromotor angeordnet, dass bei Aktivierung der Bremse ein Bremsmoment in die Rotorwelle eingeleitet wird. Vorzugsweise erfolgt die Aktivierung der Bremse im stromlosen Zustand der Bremse. Hierzu drücken Federelemente im stromlosen Zustand eine Ankerscheibe auf einen Bremsbelagträger, der drehfest mit der Rotorwelle verbunden ist und axial, also parallel zur Drehachse der Welle verschoben wird, auf eine Bremsfläche zur Erzeugung von Reibmoment.

Die Bremsansteuerung dient zur Ansteuerung, insbesondere Aktivierung, der Bremse In einem ersten Verfahrensschritt. Die Bremsansteuerung weist hierzu einen Gleichrichter auf, aus dem eine Spule der Bremse mit Gleichstrom beaufschlagbar ist. zum Steuern der am gleichspannungsseitigen Anschluss des Gleichrichters anliegenden Spannung weist die Bremsansteuerung zumindest einen, insbesondere pulsweitenmoduliert angesteuerten, Halbleiterschalter auf.

Eine eintreibende Welle des Getriebes ist von einer Rotorwelle des Elektromotors angetrieben oder einstückig, insbesondere und einteilig, mit ihr ausgeführt.

Der Sensor ist als Sensor zur Erfassung der Temperatur der Statorwicklung des Elektromotors ausgeführt. Alternativ oder zusätzlich sind aber auch ein Sensor zur Erfassung einer Temperatur des Getriebes oder ein Sensor zur Erfassung des Ölstandes des Getriebes vorsehbar.

Jeder Antriebskomponente ist eine jeweilige Identifikationsinformation zugeordnet.

In einem ersten Verfahrensschritt, insbesondere bei der Herstellung des Antriebs, wird eine Gesamtidentifikationsinformation in einen innerhalb des Elektromotors angeordneten Speicher übertragen und bleibt dort dauerhaft, insbesondere auch bei Ausfall der elektrischen Stromversorgung, gespeichert.

Dabei ist die Gesamtidentifikationsinformation vorzugsweise durch die Aneinanderreihung der Identifikationsinformation der einzelnen Antriebskomponenten gebildet.

Die Gesamtidentifikationsinformation wird auch an den Umrichter 1 übermittelt. Dies kann entweder bei Herstellung oder Inbetriebnahme des Umrichters 1 erfolgen. Vorzugsweise wird die Gesamtidentifikationsinformation über Internet und/oder eine Datenaustauschverbindung zur Verfügung gestellt.

Der Speicher ist bevorzugt innerhalb des Anschlusskastens des Elektromotors angeordnet oder im Motorinnenraum, insbesondere an der Innenseite des B-Lagerschilds des Elektromotors. Der Speicher ist als Datenspeicher ausgeführt und somit mit Datenbeschreibbar und die Daten sind auch auslesbar. Hierzu ist der Speicher mittels eines Datenbusses mit dem Umrichter 1 zum Datenaustausch verbunden, so dass eine Datenübertragung (4, 5) ausführbar ist.

In einem zeitlich nachfolgenden Schritt wird bei der Inbetriebnahme des Antriebssystems und/oder bei jedem Einschalten oder Beendigen eines Stand-By-Zustands, insbesondere also bei Starten des regulären Betriebs, vom Umrichter 1 die im Speicher 1 aktuell vorhandene Gesamtidentifikationsinformation ausgelesen und mit der im Umrichter 1 gespeicherten Information verglichen.

Wie in Figur 1 dargestellt, wird erfindungsgemäß in bevorzugter Ausführung die Gesamtidentifikationsinformation im ersten Verfahrensschritt bei einer ersten Datenübertragung 4 in den Speicher 4 eingeschrieben oder die schon eingeschriebene Gesamtidentifikationsinformation ausgelesen. Im zweiten, zeitlich nach dem ersten ausgeführten Verfahrensschritt wird bei einer zweiten Datenübertragung 4 die Gesamtidentifikationsinformation aus dem Speicher ausgelesen und mit der im Umrichter 1 hinterlegten Gesamtidentifikationsinformation verglichen.

Wie in Figur 1 dargestellt, ist im ersten Verfahrensschritt ein Antrieb 6 mit Speicher 8 mit dem Umrichter 1 verbunden, so dass die erste Datenübertragung 4 ausführbar ist. Im zweiten Verfahrensschritt ist allerdings der Antrieb 6 gegen einen Antrieb 7 mit Speicher 9 ausgetauscht, so dass bei der zweiten Datenübertragung 5 eine entsprechende Gesamtidentifikationsinformation aus dem Speicher 9 ausgelesen wird.

Beispielsweise ist dies dadurch entstanden, dass eine Reparatur zwischen dem ersten und zweiten Verfahrensschritt ausgeführt wurde, bei der der Antrieb 6durch einen Antrieb 7 ersetzt wurde oder eine der Antriebskomponenten des Antriebs 6 ersetzt wurde, und nun ein anderer Antrieb 7, der sich in mindestens einer seiner Antriebskomponenten unterscheidet von dem zuvor vorhandenen Antrieb 6.

Abhängig vom Ergebnis des Vergleichs der aktuell auf dem Antrieb 7 ausgelesenen Gesamtidentifikationsinformation mit der im Umrichter 1 gespeicherten Gesamtidentifikationsinformation, die im ersten Verfahrensschritt im Antrieb 6 vorhanden war, wird dann an einem Anzeigemittel 2 des Umrichters 1 eine Fehlerinformation oder eine Warninformation angezeigt und/oder das Antriebssystem in einen sicheren Zustand, insbesondere in einen abgeschalteten Zustand, versetzt.

Der Umrichter 1 ist vom Antrieb beabstandet angeordnet. Umrichter 1 und Antrieb sind also mechanisch voneinander getrennt. Umrichter 1 und Antrieb sind über elektrische Leitungen miteinander verbunden.

Die Antriebskomponenten sind am Elektromotor mechanisch gehalten oder mit dem Elektromotor mechanisch verbunden.

Bei weiteren erfindungsgemäßen Ausführungsbeispielen ist der Antrieb mit derartigen Antriebskomponenten ausgeführt, dass die Identifikationsinformation der jeweiligen Antriebskomponenten von einer Elektronikanordnung ausgelesen wird, die den Speicher umfasst und im Elektromotor angeordnet ist, insbesondere im Anschlusskasten des Elektromotors oder im Motorinnenraum, insbesondere an der Innenseite des B-Lagerschilds des Elektromotors.

Der Elektromotor weist ein erstes, insbesondere A-seitiges, Lagerschild auf, das ein erstes Lager der Rotorwelle des Elektromotors aufnimmt, und ein zweites, insbesondere B-seitiges Lagerschild auf, das ein zweites Lager der Rotorwelle des Elektromotors aufnimmt.

Die Lagerschilde sind mit dem Statorgehäuse des Elektromotors verbunden. Dabei ist das erste Lagerschild auf der Abtriebsseite des Statorgehäuses angeordnet und das zweite Lagerschild auf der vom ersten Lagerschild in axialer Richtung abgewandten Seite des Lagerschilds.

An der Innenseite des zweiten Lagerschildes ist auch der Winkelsensor angeordnet, mit welchem die Winkellage der Rotorwelle erfasst wird. Die Elektronik des Winkelsensors ist mit der Elektronikanordnung mittels eines Datenbusses verbunden. Somit ist die Identifikationsinformation dieser Antriebskomponente zur Elektronikanordnung übertragbar

Alternativ ist aber auch ein mittels elektromagnetischer Wellen ein RFID-Tag auslesbar, das an dem Winkelsensor angebracht ist.

Ebenso sind die anderen Antriebskomponenten entweder direkt mittels eines Datenbusses mit der Elektronikanordnung verbunden oder sie weisen ebenfalls eine RFID Tag auf, der von der Elektronikanordnung auslesbar ist.

Somit ist die Elektronikanordnung in der Lage, zeitlich wiederkehrend oder nach Einschalten oder nach Verlassen des Standby-Zustands die Identifikationsinformation der zum Antrieb gehörigen Antriebskomponenten auszulesen und daraus die jeweils
Gesamtidentifikationsinformation zu bilden und im Speicher (8, 9) zu hinterlegen.

Wenn also eine der Antriebskomponenten ausgetauscht wird, wird im Speicher (8, 9) die Gesamtidentifikationsinformation aktualisiert und ist danach vom Umrichter 1 auslesbar.

Außerdem wird im zweiten Verfahrensschritt für den Fall, dass eine Antriebskomponente als verändert erkannt wird, der Umrichter über eine Datenbusverbindung mit einem Rechner verbunden, der die Kompatibilität der aktuellen Antriebskomponente mit dem im ersten Verfahrensschritt vorhandenen Antrieb anhand der beim ersten Verfahrensschritt ausgelesenen Gesamtidentifikationsinformation überprüft und das Ergebnis der Überprüfung dem Umrichter übermittelt.

Statt des RFID-Tag ist aber auch ein NFC-Tag verwendbar.

Bei weiteren erfindungsgemäßen Ausführungsbeispielen ist der Umrichter mechanisch mit dem Elektromotor verbunden, insbesondere in einem Deckel des Anschlusskastens des Elektromotors angeordnet.

### Bezugszeichenliste

1 Umrichter
2 Anzeigemittel
3 Überwachungsmittel
4 erste Datenübertragung
5 zweite Datenübertragung
6 Antrieb
7 Antrieb
8 Speicher
9 Speicher

## Patentansprüche

1. Antriebssystem mit einem von einem Umrichter (1) gespeisten Antrieb (6),
wobei der Antrieb (6) einen Elektromotor sowie weitere Antriebskomponenten aufweist,
wobei im Elektromotor eine Elektronikanordnung mit Speicher (8) angeordnet ist,
wobei der Speicher (8) derart geeignet ausgeführt ist, dass im Speicher (8) eine Gesamtidentifikationsinformation hinterlegt ist, die aus den Identifikationsinformationen der Antriebskomponenten gebildet und/oder zusammengesetzt ist,
wobei der Umrichter (1) mit der Elektronikanordnung über einen Datenübertragungskanal verbunden ist,
wobei der Umrichter (1) einen Datenspeicher, der geeignet ist, eine erste, zu einem ersten Zeitpunkt im Speicher (8) des Antriebs (6) gespeicherte Gesamtidentifikationsinformation ebenfalls zu speichern, und ein Vergleichsmittel aufweist, das geeignet ist, die erste Gesamtidentifikationsinformation mit einer jeweils aktuell aus dem Speicher (8) des Antriebs (6) ausgelesenen Gesamtidentifikationsinformation zu vergleichen.
**dadurch gekennzeichnet, dass**
die weiteren Antriebskomponenten mit dem Elektromotor mechanisch verbunden sind und/oder im Elektromotor integriert angeordnet sind,
wobei der Umrichter (1) mit dem Antrieb (6) mittels eines Drehstromkabels verbunden ist,
wobei der Umrichter (1) ein Anzeigemittel (2) aufweist, das geeignet ist, das Ergebnis des Vergleichens anzuzeigen,
wobei jede Antriebskomponente mit der Elektronikanordnung zur Datenübertragung (4) verbunden ist und die Elektronikanordnung geeignet ist, eine Identitätsinformation aus der Antriebskomponente auszulesen und aus den jeweils ausgelesenen Identitätsinformationen der Antriebskomponenten eine Gesamtidentifikationsinformation zu bilden und im Speicher (8) zu hinterlegen.

2. Antriebssystem nach Anspruch 1,
**dadurch gekennzeichnet, dass**
eine oder mehrere der Antriebskomponenten ein Winkelsensor, eine Bremse, eine Bremsansteuerung, ein Getriebe und/oder ein Sensor, insbesondere Temperatursensor ist oder sind.

3. Antriebssystem nach einem der vorangegangenen Ansprüche,
**dadurch gekennzeichnet, dass**
die Antriebskomponenten jeweils einen NFC-Tag oder RFID-Tag, in dem eine jeweilige Identitätsinformation gespeichert ist, aufweisen und die Elektronikanordnung geeignet ist, den oder die jeweiligen NFC-Tags oder RFID-Tags auszulesen und aus den jeweils ausgelesenen Identitätsinformationen der Antriebskomponenten eine Gesamtidentifikationsinformation zu bilden und im Speicher (8) zu hinterlegen.

4. Verfahren zum Betreiben eines Antriebssystems,
wobei das Antriebssystem einen Umrichter (1) und einen Antrieb (6) aufweist,
wobei der Antrieb (6) einen Elektromotor sowie weitere Antriebskomponenten aufweist,
wobei im Elektromotor eine Elektronikanordnung mit Speicher (8) angeordnet ist,
wobei im Umrichter (1) ein Datenspeicher angeordnet ist,
**dadurch gekennzeichnet, dass**
die weiteren Antriebskomponenten mit dem Elektromotor mechanisch verbunden werden und/oder im Elektromotor integriert angeordnet werden,
wobei der Umrichter (1) mit dem Antrieb (6) mittels eines Drehstromkabels, verbunden wird,
wobei ein Anzeigemittel (2) des Umrichters (1) das Ergebnis des Vergleichens anzeigt,
wobei jede Antriebskomponente mit der Elektronikanordnung zur Datenübertragung (4) verbunden ist und die Elektronikanordnung eine Identitätsinformation aus der Antriebskomponente ausliest und aus den jeweils ausgelesenen Identitätsinformationen der Antriebskomponenten eine Gesamtidentifikationsinformation bildet und im Speicher zu hinterlegt,
wobei in einem ersten Verfahrensschritt im Datenspeicher des Umrichters (1) eine Gesamtidentifikationsinformation abgespeichert wird,
wobei in einem zweiten, zeitlich dem ersten Verfahrensschritt nachfolgenden Verfahrensschritt eine Gesamtidentifikationsinformation aus dem Speicher (8) der Elektronikanordnung des Antriebs (6) ausgelesen wird, zum Umrichter (1) übertragen wird und vom Umrichter (1) mit der im ersten Verfahrensschritt im Datenspeicher des Umrichters (1) gespeicherten Gesamtidentifikationsinformation verglichen wird.

5. Verfahren nach Anspruch 4,
**dadurch gekennzeichnet, dass** im ersten Verfahrensschritt die insbesondere zu diesem Zeitpunkt aktuelle Gesamtidentifikationsinformation aus dem Speicher (8) der Elektronikanordnung des Antriebs (6) ausgelesen wird und zum Umrichter (1) übertragen wird und dann im Umrichter (1), insbesondere in einem Datenspeicher des Umrichters (1), die Gesamtidentifikationsinformation abgespeichert wird.

6. Verfahren nach Anspruch 4 oder 5,
**dadurch gekennzeichnet, dass** abhängig vom Ergebnis des Vergleichs eine Warninformation oder Fehlerinformation angezeigt oder weitergeleitet wird oder der Antrieb (6) in einen sicheren Zustand versetzt wird, insbesondere abgeschaltet wird.

7. Verfahren nach einem der vorangegangenen Ansprüche 4-6,
**dadurch gekennzeichnet, dass**
vor dem ersten Verfahrensschritt und/oder zeitlich wiederkehrend die Elektronikanordnung eine jeweilige Identitätsinformation aus der jeweiligen Antriebskomponente, insbesondere aus einer jeweiligen Datenspeichereinheit der jeweiligen Antriebskomponente, ausliest und aus den jeweils ausgelesenen Identitätsinformationen der Antriebskomponenten eine Gesamtidentifikationsinformation bildet und im Speicher (8) hinterlegt.

8. Verfahren nach einem der vorangegangenen Ansprüche 4-7,
**dadurch gekennzeichnet, dass**
zur Bildung der Gesamtidentifikationsinformation die jeweiligen Identitätsinformationen aller Antriebskomponenten aneinander angereiht werden.

9. Verfahren nach einem der vorangegangenen Ansprüche 4-8,
**dadurch gekennzeichnet, dass**
die Elektronikanordnung die jeweilige Identitätsinformation der jeweiligen Antriebskomponente berührungslos, insbesondere mittels Funkwellen aus einem jeweiligen NFC- oder RFID-Tag, ausliest oder leitungsgebunden über eine Datenschnittstelle, mit welcher die Antriebskomponenten elektrisch verbunden sind.

10. Verfahren nach einem der vorangegangenen Ansprüche 4-9,
**dadurch gekennzeichnet, dass**
im zweiten Verfahrensschritt für den Fall, dass eine Antriebskomponente als verändert erkannt wird, der Umrichter (1) über eine Datenbusverbindung mit einem Rechner verbunden wird, der die Kompatibilität der aktuellen Antriebskomponente mit dem im ersten Verfahrensschritt vorhandenen Antrieb (6) anhand der beim ersten Verfahrensschritt ausgelesenen Gesamtidentifikationsinformation überprüft und das Ergebnis der Überprüfung dem Umrichter (1) übermittelt.

11. Verfahren nach einem der vorangegangenen Ansprüche 4-10,
**dadurch gekennzeichnet, dass**
der Antrieb (6) für die Zeitdauer der Überprüfung durch den Rechner in den sicheren Zustand gebracht und/oder abgeschaltet wird.

## Claims

1. Drive system comprising a drive (6) fed by a converter (1),
wherein the drive (6) has an electric motor and further drive components,
wherein an electronics assembly having a memory (8) is arranged in the electric motor,
wherein the memory (8) is suitably configured such that aggregate identification information, which is formed and/or composed of the identification information of the drive components, is stored in the memory (8),
wherein the converter (1) is connected to the electronics assembly by means of a data transmission channel,
wherein the converter (1) has a data memory, which is suitable likewise for storing first aggregate identification information that was stored in the memory (8) of the drive (6) at a first time, and a comparison means, which is suitable for comparing the first aggregate identification information with aggregate identification information currently being read out from the memory (8) of the drive (6),
**characterised in that**
the further drive components are mechanically connected to the electric motor and/or are arranged in the electric motor in an integrated manner,
wherein the converter (1) is connected to the drive (6) by means of a three-phase cable,
wherein the converter (1) has a display means (2) that is suitable for displaying the result of the comparison,
wherein each drive component is connected to the electronics assembly for the purpose of data transmission (4), and the electronics assembly is suitable for reading out identity information from the drive component and for creating aggregate identification information from the drive component identity information read out in each case and for storing this aggregate identification information in the memory (8).

2. Drive system according to claim 1,
**characterised in that**
one or more of the drive components are an angle sensor, a brake, a brake control, a gearing and/or a sensor, in particular a temperature sensor.

3. Drive system according to any of the preceding claims,
**characterised in that**
the drive components each have an NFC tag or an RFID tag in which associated identity information is stored, and the electronics assembly is suitable for reading each NFC tag or RFID tag and for creating aggregate identification information from the drive component identity information read out in each case and for storing this aggregate identification information in the memory (8).

4. Method for operating a drive system,
wherein the drive system comprises a converter (1) and a drive (6),
wherein the drive (6) has an electric motor and further drive components,
wherein an electronics assembly having a memory (8) is arranged in the electric motor, wherein a data memory is arranged in the converter (1),
**characterised in that**
the further drive components are mechanically connected to the electric motor and/or are arranged in the electric motor in an integrated manner,
wherein the converter (1) is connected to the drive (6) by means of a three-phase cable,
wherein a display means (2) of the converter (1) displays the result of the comparison,
wherein each drive component is connected to the electronics assembly for the purpose of data transmission (4), and the electronics assembly reads out identity information from the drive component and creates aggregate identification information from the drive component identity information read out in each case and stores this aggregate identification information in the memory,
wherein, in a first method step, aggregate identification information is stored in the data memory of the converter (1),
wherein, in a second method step chronologically following the first method step, aggregate identification information is read out from the memory (8) of the electronics assembly of the drive (6), transmitted to the converter (1) and compared by the converter (1) with the aggregate identification information that was stored in the data memory of the converter (1) in the first method step.

5. Method according to claim 4,
**characterised in that**
in the first method step, the aggregate identification information that is current in particular at this time is read out from the memory (8) of the electronics assembly of the drive (6), is transmitted to the converter (1), and then the aggregate identification information is stored in the converter (1), in particular in a data memory of the converter (1).

6. Method according to claim 4 or claim 5,
**characterised in that**
depending on the result of the comparison, warning information or fault information is displayed or relayed, or the drive (6) is placed in a safe state, in particular is switched off.

7. Method according to any of the preceding claims 4-6,
**characterised in that**
before the first method step and/or recurrently over time, the electronics assembly reads out associated identity information from each drive component, in particular from a data storage unit of each drive component, creates aggregate identification information from the drive component identity information read out in each case and stores this aggregate identification information in the memory (8).

8. Method according to any of the preceding claims 4-7,
**characterised in that**
to create the aggregate identification information, the associated identity information of all the drive components is concatenated.

9. Method according to any of the preceding claims 4-8,
**characterised in that**
the electronics assembly reads out the associated identity information of each drive component either contactlessly, in particular by means of radio waves from an associated NFC or RFID tag, or in a wired manner via a data interface to which the drive components are electrically connected.

10. Method according to any of the preceding claims 4-9,
**characterised in that**
in the second method step, if a drive component is identified as having changed, the converter (1) is connected by means of a data bus link to a computer which checks the compatibility of the current drive component with the drive (6) present in the first method step, on the basis of the aggregate identification information read out in the first method step, and communicates the result of the check to the converter (1).

11. Method according to any of the preceding claims 4-10,
**characterised in that**
the drive (6) is switched to the safe state and/or switched off for the duration of the check by the computer.

## Revendications

1. Système d'entraînement avec un entraînement (6) alimenté par un convertisseur (1),
l'entraînement (6) comprenant un moteur électrique ainsi que d'autres composants d'entraînement, un dispositif électronique avec mémoire (8) étant disposé dans le moteur électrique,
la mémoire (8) étant réalisée de manière appropriée de sorte qu'une information d'identification globale soit enregistrée dans la mémoire (8), laquelle est constituée et/ou composée à partir des informations d'identification des composants d'entraînement,
le convertisseur (1) étant relié au dispositif électronique via un canal de transmission de données, le convertisseur (1) comprenant une mémoire de données, qui est apte à sauvegarder également une première information d'identification globale, qui est enregistrée à un premier
instant dans la mémoire (8) de l'entraînement (6), et un moyen de comparaison, qui est apte à comparer la première information d'identification globale avec une information d'identification globale respectivement lue actuellement à partir de la mémoire (8) de l'entraînement (6).
**caractérisé en ce que**
les autres composants d'entraînement sont reliés mécaniquement au moteur électrique et/ou sont disposés de manière intégrée dans le moteur électrique,
le convertisseur (1) étant relié à l'entraînement (6) au moyen d'un câble triphasé,
le convertisseur (1) comprenant un moyen d'affichage (2) qui est apte à afficher le résultat de la comparaison,
chaque composant d'entraînement étant relié au dispositif électronique pour la transmission de données (4) et le dispositif électronique étant apte à lire une information d'identité à partir du composant d'entraînement et à constituer à partir des informations d'identité respectivement lues des composants d'entraînement une information d'identification globale et à l'enregistrer dans la mémoire (8).

2. Système d'entraînement selon la revendication 1, **caractérisé en ce que**
un ou plusieurs des composants d'entraînement sont un capteur d'angle, un frein, une commande de frein, un engrenage et/ou un capteur, en particulier un capteur de température.

3. Système d'entraînement selon l'une des revendications précédentes,
**caractérisé en ce que**
les composants d'entraînement comprennent respectivement une étiquette NFC ou une étiquette RFID, dans laquelle une information d'identité respective est enregistrée, et le dispositif électronique est apte à lire la ou les étiquettes NFC ou RFID respectives et à constituer à partir des informations d'identité respectivement lues des composants d'entraînement une information d'identification globale et à l'enregistrer dans la mémoire (8).

4. Procédé pour faire fonctionner un système d'entraînement,
le système d'entraînement comprenant un convertisseur (1) et un entraînement (6),
l'entraînement (6) comprenant un moteur électrique ainsi que d'autres composants d'entraînement, un dispositif électronique avec mémoire (8) étant disposé dans le moteur électrique,
une mémoire de données étant disposée dans le convertisseur (1),
**caractérisé en ce que**
les autres composants d'entraînement sont reliés mécaniquement au moteur électrique et/ou sont disposés de manière intégrée dans le moteur électrique,
le convertisseur (1) étant relié à l'entraînement (6) au moyen d'un câble triphasé,
un moyen d'affichage (2) du convertisseur (1) affichant le résultat de la comparaison,
chaque composant d'entraînement étant relié au dispositif électronique pour la transmission de données (4) et le dispositif électronique lisant une information d'identité à partir du composant d'entraînement et constituant à partir des informations d'identité respectivement lues des composants d'entraînement une information d'identification globale et l'enregistrant dans la mémoire,
dans une première étape de procédé, une information d'identification globale est sauvegardée dans la mémoire de données du convertisseur (1),
dans une deuxième étape de procédé, postérieure dans le temps à la première étape de procédé, une information d'identification globale est lue à partir de la mémoire (8) du dispositif électronique de l'entraînement (6), transmise au convertisseur (1)
et comparée par le convertisseur (1) à l'information d'identification globale sauvegardée dans la mémoire de données du convertisseur (1) lors de la première étape de procédé.

5. Procédé selon la revendication 4,
**caractérisé en ce que** lors de la première étape de procédé, l'information d'identification globale, en particulier actuelle à ce
moment, est lue à partir de la mémoire (8) du dispositif électronique de l'entraînement (6) et transmise au convertisseur (1), puis l'information d'identification globale est sauvegardée dans le convertisseur (1), en particulier dans une mémoire de données du convertisseur (1).

6. Procédé selon la revendication 4 ou 5,
**caractérisé en ce qu'**en fonction du résultat de la comparaison, une information d'avertissement ou une information d'erreur est affichée ou transmise, ou l'entraînement (6) est mis dans un état sécurisé, en particulier est désactivé.

7. Procédé selon l'une des revendications précédentes 4 à 6, **caractérisé en ce que** avant la première étape de procédé et/ou de manière récurrente dans le temps, le dispositif électronique lit une information d'identité respective à partir du composant d'entraînement respectif, en particulier à partir d'une unité de mémoire de données respective du composant d'entraînement respectif, et à partir des informations d'identité respectivement lues des composants d'entraînement, constitue une information d'identification globale et l'enregistre dans la mémoire (8).

8. Procédé selon l'une des revendications précédentes 4 à 7, **caractérisé en ce que** pour constituer l'information d'identification globale, les informations d'identité respectives de tous les composants d'entraînement sont alignées.

9. Procédé selon l'une des revendications précédentes 4 à 8, **caractérisé en ce que** le dispositif électronique lit l'information d'identité respective du composant d'entraînement respectif sans contact, en particulier au moyen d'ondes radio à partir d'une étiquette NFC ou RFID respective, ou par liaison filaire via une interface de données, à laquelle les composants d'entraînement sont électriquement reliés.

10. Procédé selon l'une des revendications précédentes 4 à 9, **caractérisé en ce que** dans la deuxième étape de procédé, dans le cas où un composant d'entraînement est reconnu comme modifié, le convertisseur (1) est relié à un ordinateur via une connexion bus de données, lequel vérifie la compatibilité du composant d'entraînement actuel avec l'entraînement (6) existant lors de la première étape de procédé sur la base de l'information d'identification globale lue lors de la première étape de procédé et transmet le résultat de la vérification au convertisseur (1).

11. Procédé selon l'une des revendications précédentes 4 à 10, **caractérisé en ce que** l'entraînement (6) est mis dans l'état sécurisé et/ou désactivé pendant la durée de la vérification par l'ordinateur.
